# EUROPEAN PATENT SPECIFICATION

(11) **EP 2 438 711 B1**
(45) Date of publication and mention of the grant of the patent: **25.04.2018**
(21) Application number: 09788560.2
(22) Date of filing: 02.06.2009
(51) Int. Cl.: H04L 12/24, H04L 12/26

(54) **METHODS AND COMMUNICATION DEVICES IN A RADIO TELECOMMUNICATIONS NETWORK FOR PERFORMANCE ANALYSIS OF A COMMUNICATION DEVICE**
VERFAHREN UND KOMMUNIKATIONSEINRICHTUNGEN IN EINEM FUNK-TELEKOMMUNIKATIONSNETZ ZUR LEISTUNGSANALYSE EINES KOMMUNIKATIONSGERÄTES
PROCÉDÉS ET DISPOSITIFS DE COMMUNICATION DANS UN RÉSEAU DE RADIOCOMMUNICATIONS POUR DÉTERMINER LA PERFORMANCE D'UN DISPOSITIF DE COMMUNICATION

(43) Date of publication of application: 11.04.2012
(73) Proprietor: Telefonaktiebolaget LM Ericsson (publ), 164 83 Stockholm (SE)
(72) Inventor: STÅLNACKE, Per-Daniel, S-167 65 Bromma (SE); REHNBERG, Peter, S-586 66 LINKÖPING (SE)
(74) Representative: Zacco Sweden AB
(86) International application number: PCT/SE2009/050643
(87) International publication number: WO 2010/140931

(56) References cited:
- CISCO: "Using NetFlow Filtering or Sampling to Select the Network Traffic to Track" CISCO IOS NETFLOW CONFIGURATION GUIDE, CISCO SYSTEMS, SAN JOSE, CA, US, 2 May 2005 (2005-05-02), pages 1-24, XP002350607
- "NetFlow Services and Applications" CISCO WHITE PAPER, XX, XX, 1 March 1999 (1999-03-01), pages 1-27, XP002258359

## Description

### TECHNICAL FIELD

Embodiments herein relate to methods and communication devices in a radio telecommunications network in general, and performance analysis of a communication device in particular.

### BACKGROUND

In radio telecommunications networks today, it is important that operators continuously monitor and evaluate performance of a system. Performance information may be gathered in base stations in the system and be reported to an operation and maintenance (O&M) system of the operator for evaluation. In some systems, performance management (PM) counters are used to evaluate the performance of a system. A PM counter may count dropped calls for a circuit switch connection, throughput for a packet data connection, and many other things. In a system using PM counters, the PM counters are the prime source of data when evaluating the performance and trouble shooting the system. The PM counters are hard coded in the base stations of the system. For example, if something "x" occurs in the system, a hard coded counter "PMx" is incremented in the base stations based on a request from an O&M node. Another example is that the throughput, delay or something similar of a connection is measured and that will update certain defined PM counters for that connection.

A problem with the counter technology is that the number of different possible PM counters increases exponentially with the complexity of the system. For example, assume that the operator wants to measure something by the PM counter Pmxyz where x[1..l], y [1..m], and z [1..n], the user defines the different possibilities of a measure entity (Ent) (x[1..l], y [1..m], z [1..n.]). The Ent may be E-UTRAN Radio access bearer (ERAB) establishment and x[1..l], y [1..m], z [1..n], might be ERAB, Mobile type, Quality of service profile, etc. Then the system must support all possible combinations of x, y and z, i.e. l*n*m PM counters although the actual system at one particular operator is only using a subset of x, y and z. Furthermore, even if the different combinations are known and it is somehow possible to configure the PM counters that shall be used for that particular system, there is still a risk for errors due to incorrect definitions of the PM counters or not updated definitions of the PM counters. Hence, reported result from an erroneous defined PM counter will result in an erroneous performance analysis at the O&M node.

Prior art method steps are disclosed in: CISCO, "Using NetFlow Filtering or Sampling to Select the Network Traffic to Track", CISCO IOS NETFLOW CONFIGURATION GUIDE, CISCO SYSTEMS, SAN JOSE, CA, US, (20050502), PAGE 1 - 24, XP002350607.

Further details regarding prior art methods can be found in: "NetFlow Services and Applications", CISCO WHITE PAPER, XX, XX, (19990301), PAGE 1 - 27, XP002258359.

### SUMMARY

There is an object of embodiments herein to provide methods and communications devices to enable an efficient and reliable way to perform performance analysis within a radio telecommunications network according to independent claims 1, 9, 10 and 12 which define the scope of the invention. According to a first aspect, the object is achieved by a method in a communication device of a radio telecommunications network for creating at least one performance management counter within the communication device. The at least one performance management counter enables provision of data to be used in a performance analysis. The communication device receives an input to set up at least one rule within the communication device. The rule is to be fulfilled for creating at least one performance management counter to count occurrences of a performance management parameter related to the communication device.

The communication device sets up the at least one rule and detects an impulse and determines whether the at least one rule has been fulfilled based on the impulse. When the at least one rule has been fulfilled the communication device monitors data associated to the communication device and dynamically creates the at least one performance management counter to count occurrences of the at least one performance management parameter detected in the monitored data. The communication device then transmits a message comprising a result of the at least one performance management counter to an operation and maintenance communication device. The detecting of an impulse further comprises receiving an impulse. The impulse comprises a request, from the operation and maintenance communication device, requesting the communication device to create a performance management counter for counting a single performance management parameter. The at least one rule states that if an impulse comprises a request requesting a creation of a performance management counter of the single performance management parameter, a performance management counter should be created counting occurrences of a performance management parameter detected in the monitored data associated to the single performance management parameter. Furthermore, the creation of the at least one performance management counter comprises creating more than one performance management counter, and the transmission of a message comprises transmission of results of more than one performance management counter.

According to a second aspect, the object is achieved by a communication device arrangement for a communication device. The communication device arrangement comprises an obtaining unit arranged to obtain an input to set up an at least one rule within the communication device. The rule is to be fulfilled in order to create at least one performance management counter to count occurrences of a performance management parameter related to the communication device. The communication device arrangement further comprises a processing unit arranged to set up the at least one rule and a detecting unit arranged to detect an impulse. The impulse is used by the processing unit to determine whether the at least one rule has been fulfilled. The communication device arrangement furthermore comprises a monitoring unit arranged, in the case the at least one rule is fulfilled, to monitor data associated to the communication device. The communication device arrangement also comprises a counter unit that is arranged to create the at least one performance management counter to count occurrences of the at least one performance management parameter detected in the monitored data. The communication device arrangement further comprises a network interface unit arranged to transmit a result of the at least one performance management counter within a message to an operation and maintenance communication device. The communication device arrangement for a communication device is arranged to receive an impulse, wherein the impulse comprises a request, from the operation and maintenance communication device, requesting the communication device to create a performance management counter for counting a single performance management parameter. The at least one rule states that if an impulse comprises a request requesting a creation of a performance management counter of the single performance management parameter, a performance management counter should be created counting occurrences of a performance management parameter detected in the monitored data associated to the single performance management parameter. Moreover, the counter unit is arranged to create more than one performance management counter, and the network interface unit is arranged to transmit results of more than one performance management counter.

According to a third aspect, the object is achieved by a method in an operation and maintenance communication device for determining performance related to the communication device. Having created and transmitted, to the communication device, a request for counting a single performance management parameter, the operation and maintenance communication device receives a message comprising results of more than one performance management counter. The result indicates occurrence of a performance management parameter from the communication device.

The operation and maintenance communication device analyses the message by at least one rule for determining that the performance management parameters of the more than one performance management counter are related to the requested single performance management parameter. The single performance management parameter is defined within the operation and maintenance communication device.

When determined that the more than one performance management counter are related to the single performance management parameter, the operation and maintenance communication device determines performance related to the communication device based on the result received from the communication device in relation to the requested single performance management parameter.

According to a fourth aspect, the object is achieved by an operation and maintenance arrangement for an operation and maintenance communication device. The operation and maintenance arrangement comprises a network interface unit arranged to receive a message from a communication device. The message comprises results of more than one performance management counter, wherein each result indicates an occurrence of a performance management parameter.

A requesting unit is arranged to create a request for counting a single performance management parameter and the network interface unit is further configured to transmit the request to the communication device.

The operation and maintenance arrangement further comprises a processing unit arranged to analyse the message by at least one rule. The rule is used to determine whether the performance management parameters of the more than one performance management counter are related to a single performance management parameter defined within the operation and maintenance arrangement.

The operation and maintenance arrangement furthermore comprises a performance unit arranged, when determined that the performance management parameters of the more than one performance management counters are related to the single performance management parameter, to determine performance related to the communication device. The performance is based on the result in relation to the requested single performance management parameter.

Hence, there is no need to hard-code all possible combinations of PM counters in the communication device that might be needed depending of the user setting and the environment of the communication device. The communication device creates PM counter/s based on what it experiences and the communication device will by itself learn which PM counters that it should define and activate. The communication device will always measure relevant things based on what it experiences and not what is predefined i.e. it makes it possible to identify things that are not expected to happen. Thus, a way of creating PM counters for counting relevant performance management parameters is provided resulting in a more efficient and reliable way to perform performance analysis.

### BRIEF DESCRIPTION OF THE DRAWINGS

Embodiments will now be described in more detail in relation to the enclosed drawings, in which:
Figure 1 shows a schematic overview of a radio telecommunications network, Figure 2 shows a schematic combined method and signalling scheme in a radio telecommunications network, Figure 3 shows a schematic combined method and signalling scheme in a radio telecommunications network,
Figure 4 shows a schematic overview of a flowchart of a method in a communication device,
Figure 5 shows a schematic overview of a flowchart of a method in a communication device,
Figure 6 shows a schematic overview of a communication device comprising an arrangement,
Figure 7 shows a schematic overview of a flowchart of a method in an operation and maintenance communication device,
Figure 8 shows a schematic overview of a flowchart of a method in an operation and maintenance communication device, and
Figure 9 shows a schematic overview of an operation and maintenance communication device comprising an arrangement.

### DETAILED DESCRIPTION

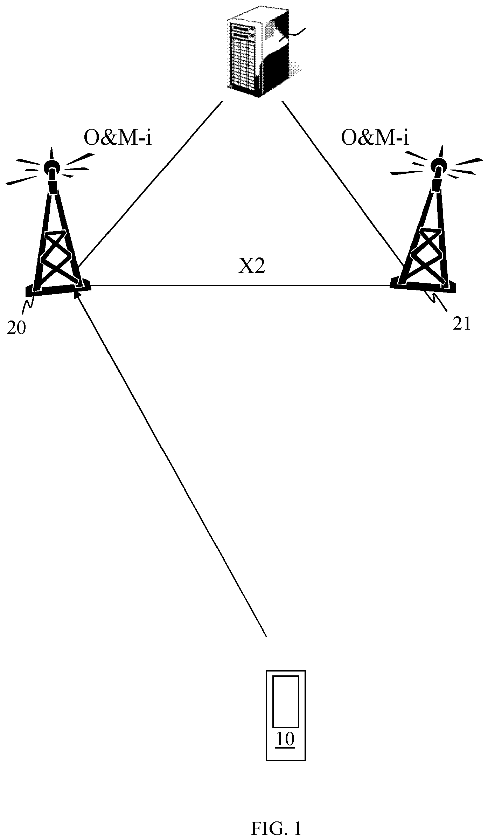

In **FIG. 1**, a schematic overview of an exemplary embodiment of a radio telecommunications network is shown.

In the illustrated embodiment, an operator via an operation and maintenance (O&M) communication device **30**, such as an operational support system node (OSS), determines that a performance analysis should be performed regarding a communication device **20**, such as a base station, eNodeB (eNB), NodeB, or any node with a performance management (PM) counter mechanism, within the radio telecommunications network.

The O&M communication device 30 transmits a request to create a type of at least one PM counter to the communication device 20 over a network connection, such as an O&M interface (O&M-i) and/or the like. The PM counter is arranged to count a single PM parameter, which in the example is, ERAB establishments of different Quality of Service class indicators (QCIs).

At the communication device 20, a number of rules has been obtained and set up. A rule implicitly defines one or more PM counters to be generated/created. The rule is activated by a received impulse. In the illustrated example, the communication device 20 comprises a first rule stating that if a received impulse comprises a request to create PM counters for counting ERAB establishments per QCI, a counter for ERAB establishments of the QCI actually used in the communication device 20 should be created. For example, the communication device 20 monitors traffic after the rule has been activated and if ERAB establishments of QCI3, QCI11 and QCI13 are used by traffic in the communication device 20, the corresponding PM counters for ERAB establishments of QCI3, QCI11 and QCI13 will be created. Hence, the communication device 20 will create relevant PM counters in an efficient manner.

When the communication device 20 receives the request from the O&M communication device 30, the communication device 20 determines that the first rule is fulfilled, that is, a request of ERAB establishments per QCI has been received. The communication device 20 then creates PM counters for the relevant classes QCI3, QCI11 and QCI13 used in the traffic associated to the communication device 20. The communication device 20 may further comprise a second rule defining how to name the PM counters, for example, the second rule may state that a PM counter for counting ERAB establishments of a QCIX should be named pmErabEstablQCIX. Hence, in the illustrated example, the communication device 20 names the created PM counters; pmErabEstablQCl3, pmErabEstablQCI11 and pmErabEstablQCI13. It should here be noted that the request may trigger a number of rules at the communication device 20.

The communication device 20 then continuously receives traffic from a UE **10** using radio access bearers of the communication device 20 and monitors the traffic and counts the occurrences of ERAB establishments of QCI3, QCI11, and QCI13 of the traffic using the PM counters pmErabEstablQCl3, pmErabEstablQCI11 and pmErabEstablQCI13.

The communication device 20 then transmits the results of the PM counters pmErabEstablQCl3, pmErabEstablQCI11 and pmErabEstablQCI13 to the O&M communication device 30. A newly created PM counter will be handled as any other PM counter at the communication device and the result will be output from the communication device together with results from any other PM counters after a time period. The time period may be predefined in a general rule set up in the communication device, the rule in the communication device 20, in the request from the O&M communication device 30, and/or the like.

The O&M communication device 30 receives the results of the PM counters pmErabEstablQCI3, pmErabEstablQCI11 and pmErabEstablQCI13 and analyses the results and determines that the counters pmErabEstablQCI3, pmErabEstablQCI11 and pmErabEstablQCI13 relate to the request of the ERAB establishment per QCI. The O&M communication device 30 then uses the results of PM counters pmErabEstablQCI3, pmErabEstablQCI11 and pmErabEstablQCI13 to determine a performance of the communication device 20.

It should be understood that the communication device 20 may comprise a number of other rules. One rule may state that an impulse comprises occurrences of a PM parameter in traffic monitored by the communication device 20. For example, a dropped connection D may generate a PM counter named pmdroppedD.

In other words, based on input from the system and certain rules, the communication device 20 will itself create a PM counter with a certain name. In a more general example, assume that there is something that shall be measured that is triggered by the entity Ent (x[4], y [8], z [2]), the communication device 20 would itself, based on rules, create the PM counter PmEntx4y8z2 and start to use it.

It would also be possible to have a rule saying that the trigger must occur at least a specified number of times until the PM counter is created and activated. For example; if entity Ent(x[4], y [8], z [2]) occurs ten times during a certain defined time, create and start to use the PM counter PmEntx4y8z2.

It is also optional to specify if a PM counter shall "live forever" or if it shall be removed after a certain time of inactivation, that is, the traffic that was previously analyzed and generated the PM counter is no longer present.

It is also possible, based on rules, to make more generic trouble shooting PM counters like PmTrouble_1...X so when problem y occurs, counter PmTrouble_y is generated. This is exemplified above in the PM counter of dropped connection D.

An option could also be that the O&M communication device 30 collecting the results of the PM counters specified on the communication device 20, checks which PM counters that are specified and active on the communication device 20 and makes these PM counters generally available on all communication devices served by the O&M communication device 30. In these embodiments, the O&M communication device 30 may transmit an indication to communication devices 20-21 within a relevant area which PM counters that should be created. Also, the communication device 20 may transmit an indication of specified PM counters to a neighbouring communication device 21 over an X2 connection so that the neigbouring communication device 21 may create relevant PM counters. In this way, the communication device 21 within an area have updated relevant PM counters used in neighbouring traffic and will be efficiently prepared for traffic handed over from the communication device 20.

Hence, in the illustrated example, there is no need to hard-code all possible combinations of PM counters that might be needed depending of the user setting and the environment of the communication device 20. The communication device 20 will by itself learn which PM counters that it should define and activate. The communication device 20 will always measure relevant things based on what it experiences and not what is predefined, e.g. enables the communication device 20 to identify things that are not expected to happen and to count occurrences of such things.

In the illustrated example in FIG.1, the radio telecommunications network comprises an Evolved Packet System (EPS). However, it should be noted that other radio telecommunications networks may be used, such as Wideband Code Division Multiple Access (WCDMA), and/or the like, and the dynamically creation of PM counters may be performed in any communication device with a PM counter function.

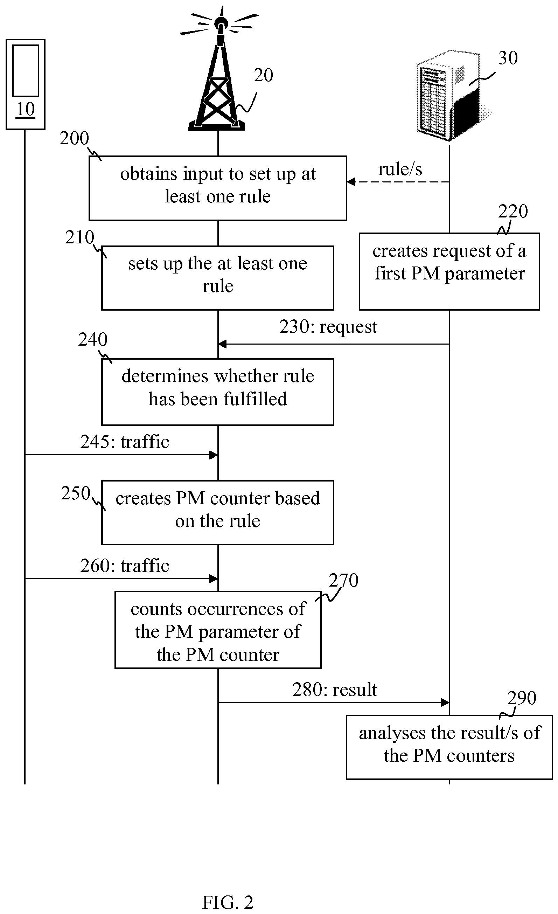

**FIG. 2** is a combined signaling scheme and flowchart depicting embodiments of the present solution. The method steps do not have to be taken in the order stated below, but may be taken in any suitable order.

In **step 200**, a rule or a number of rules are obtained in the communication device 20. For the simplicity merely a single rule will be mentioned below. The rule may be input locally at the manufacturing of the communication device 20, manually or, as denoted by a dashed arrow in FIG. 1, transmitted from the O&M communication device 30 to the communication device 20.

In **step 210**, the communication device 20 sets up the rule within the communication device 20. A rule defines that when a certain condition is met, a certain step is performed by the communication device 20. The certain condition comprises to detect an impulse and the certain step comprises to count at least one performance management (PM) parameter defined implicitly by the rule. That is, the rule does not state the PM parameter to count. Instead, the rule states a step for the communication device 20 to perform in order to retrieve the PM parameter, such as detect occurrences of PM parameters used in the traffic of communication device 20, parameters occurred in internal processes/elements of the communication device 20, and/or the like.

In **step 220**, an operator of the O&M communication device 30 determines to perform a performance analysis of the communication device 20. The analysis relates to what a single PM parameter the O&M communication device 30 needs to receive information about from the communication device 20. The O&M communication device 30 then creates a request to activate a rule to trigger the creation and activation of PM counters based on the underlying traffic passing the communication device 20.

The rule that is activated may be constructed to create counters that can be identified by the single PM parameter such as Core Network Identifier, E-UTRAN Radio Access Bearer (ERAB) of different QCIs, internal alarms and/or the like. The single PM parameter may be preset by the operator of the O&M communication device 30.

In **step 230**, the O&M communication device 30 then transmits the request to the communication device 20.

In **step 240**, the communication device 20 receives the request and determines whether a rule has been fulfilled. For example, the condition for the rule to be fulfilled comprises that the communication device 20 requires to receive an impulse. The impulse comprises a request for counting the single PM parameter has been received. As the communication device 20 has received the request, the rule is determined to have been fulfilled and the rule is activated.

In **step 245**, the communication device 20 receives, transmits and monitors traffic to and from at least one UE 10 served by the communication device 20.

In **step 250**, the communication device 20 creates one or more PM counters in accordance with what is implicitly defined by the activated rule. The activated rule implicitly defines, when fulfilled, one or a number of PM counters related to the single PM parameter. The PM counter may be created to count an occurrence of a defined entity or measure the performance of the communication device 20 related to the single PM parameter. Implicitly herein implies that the communication device 20 shall, based on monitoring of received traffic or internal processes of the communication device 20, create PM counters of PM parameters detected during the monitoring. In other words, the communication device 20 comprises a dynamical PM counter generation or creation technique that is based on predetermined rules.

The communication device 20 may also comprise a second rule defining how to name the PM counter/s. The second rule may state that a PM counter is named after what PM parameter the PM counter counts. This way of naming the PM counters will facilitate the process of defining PM parameter of the PM counter at the O&M communication device 30, when the results are reported back to the O&M communication device 30. The results are defined by the name of the PM counter.

In **step 260**, the communication device 20 continues to receive and transmit traffic to and from at least one connected UE 10.

In **step 270**, the named PM counter of the communication device 20 counts the occurrences of the PM parameter of the PM counter in the traffic. Hence, the communication device 20 registers a result of each PM counter, for example, during a time period indicated in the request, in the first rule or in a different rule.

In **step 280**, the communication device 20 transmits a message comprising the result/s of the PM counter/s back to the O&M communication device 30.

In **step 290**, the O&M communication device 30 receives the message and analyses the result of the PM counter from the communication device 20. The O&M communication device 30 may comprise a transforming rule that states that certain PM counters relate to a certain requested PM parameter. For example, if the O&M communication device 30 receives and analyses a result of a PM counter named pmQCl15, the O&M communication device 30 may comprise a rule that understands the name as a definition that the result come from a QCI counter. The O&M communication device 30 then uses this to determine performance of the communication device 20 of cells, traffic, and/or UEs related to the communication device 20. Hence, an efficient and reliable way to perform performance analysis is obtained.

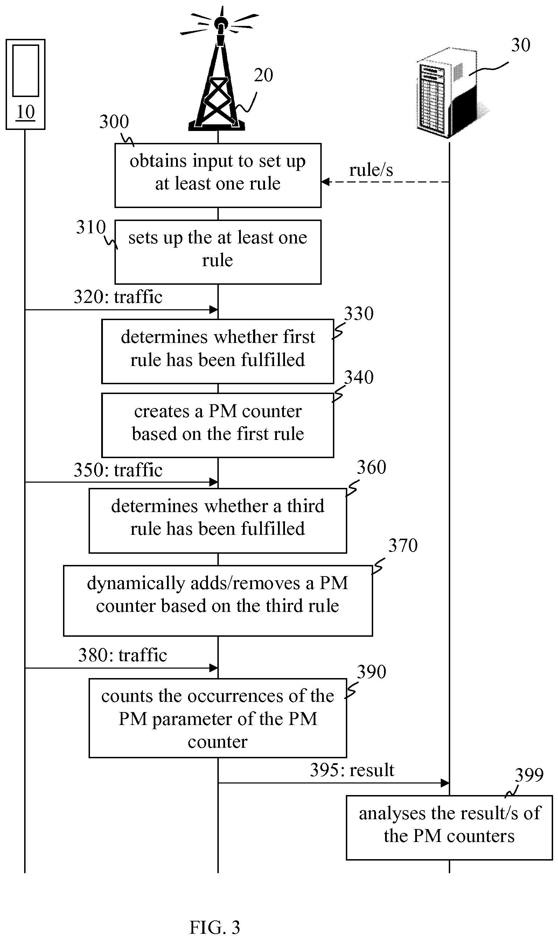

**FIG. 3** is a combined signaling scheme and flowchart depicting further embodiments of the present solution. The method steps do not have to be taken in the order stated below, but may be taken in any suitable order.

In **step 300**, a rule is obtained by the communication device 20. The rule may be input locally at the manufacturing of the communication device 20, manually, received from the O&M communication device 30 as indicated by the dashed arrow in the FIG. 3, and/or the like. This is performed as in step 200 in FIG. 2.

In **step 310**, the communication device 20 sets up the rule within the communication device 20. This is performed in a similar way as in step 210 of FIG. 2.

In **step 320**, the communication device 20 receives traffic from at least one UE 10 served by the communication device 20 and the communication device 20 monitors the traffic.

In **step 330**, the communication device 20 determines whether a first rule has been fulfilled. This step is performed in accordance with step 220. In the illustrated example, the communication device 20 has set up a first rule that uses occurrences of different events monitored in the traffic as an impulse to trigger the rule. For example, occurrence of a dropped connection over a certain radio access bearer may trigger a rule stating that the communication device 20 should create a PM counter counting occurrences of dropped connections of that ERAB. The first rule, hence, states that based on what the communication device 20 experiences in the monitored traffic the communication device 20 should create a relevant PM counter.

It should here be understood that a rule may state that if the communication device 20 detects no traffic over an ERAB during a predetermined time the communication device 20 should create a PM counter counting how long no traffic is sent over the ERAB. For example, the rule may state that if no access to a cell of the communication device 20 has been made for more than sixty minutes then the communication device 20 should create PM counter pmNoacces and increase the counter for each fifteen minute period without traffic.

Another example of a rule may be a rule indicating the creation of a PM counter when an alarm within the communication device 20, relating to software or hardware failure, is triggered. The PM counter will then count occurrences of the alarm. The operator may specify number of alarms of a certain type during a predetermined time for the rule to be considered fulfilled.

In **step 340**, the communication device 20 creates the PM counter based on the first rule. The communication device 20 may also comprise a second rule defining have to name the PM counter. The second rule may state that a PM counter is named after what PM parameter the PM counter counts. For example, in case the PM parameter comprises a dropped ERAB R the PM counter is named pmDroppedR. The step 340 in FIG. 3 corresponds to step 250 in FIG.2.

In **step 350**, the communication device 20 receives and monitors traffic from one or more UEs 10 served by the communication device 20 during a time period. The time period may be specified in the first rule, preset in the communication device 20 as a general rule and/or the like.

In **step 360**, the communication device 20 determines whether a third rule has been fulfilled. For example, a third rule may state that if the traffic changes so that a previously created PM counter is no longer relevant, the PM counter relating to that traffic should be removed. This may be the case when the traffic relating to that PM counter has not been present or active during a predetermined period of time, such as a number of days or hours. In the illustrated example, traffic relating to a previously created PM counter is no longer active and the third rule is fulfilled.

In **step 370**, the communication device 20 then dynamically changes the number of PM counters based on the fulfilled third rule. In the example, the communication device 20 removes the PM counter that is no longer relevant according to the fulfilled third rule.

In **step 380**, the communication device 20 continues to receive and monitor traffic from at least one UE 10 served by the communication device 20.

In **step 390**, the still relevant PM counter/s of the communication device 20 counts the occurrences of the respective PM parameter, in the monitored traffic and the result of the PM counter/s is registered. This is performed as in the step 270 in FIG. 2.

In **step 395**, the communication device 20 then transmits the result of each PM counter in a message back to the O&M communication device 30. This is performed as in the step 280 in FIG. 2.

In **step 399**, the O&M communication device 30 receives and analyses the result/s from the communication device 20. The O&M communication device 30 may comprise a transforming rule that states that certain PM counters relate to a certain requested PM parameter. For example, if the O&M communication device 30 receives and analyses a result of a counter named pmDroppedR, the O&M communication device 30 will determine that the counter relates to dropped connections and use this to determine performance of the communication device 20, cells and/or connections related to the communication device 20. This is performed in accordance with what is stated in step 290 in FIG. 2.

The above mentioned examples result, as stated above, in that there is no need to hard-code all possible combinations of PM counters in the communication device 20 that might be needed depending of the user setting and the environment of the communication device 20. The communication device 20 creates PM counters based on what it experiences/monitors, thus, the communication device 20 will by itself learn which PM counters that it should define and activate. The communication device 20 will then measure relevant things based on what it experiences and not what is predefined i.e. it makes it possible to identify things that are not expected to happen. Hence, a way of creating PM counters for counting relevant PM parameters is provided resulting in a more efficient and reliable way to perform performance analysis.

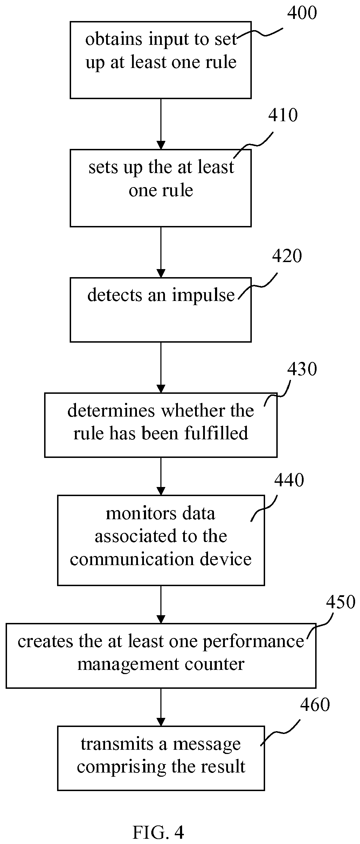

The method steps in the communication device 20 for enabling the provision of PM data to be used in a performance analysis related to the communication device 20 according to some general embodiments will now be described with reference to a flowchart depicted in **FIG. 4****.** As mentioned above the communication device 20 may comprise a base station, such as an eNB, NB, or any node with a performance management (PM) counter mechanism. The method steps do not have to be taken in the order stated below, but may be taken in any suitable order.

In **step 400**, the communication device 20 obtains an input to set up at least one rule within the communication device 20. The at least one rule is to be fulfilled in order for the communication device 20 to create at least one PM counter. The PM counter is arranged to count occurrences of a PM parameter related to the communication device 20.

In **step 410**, the communication device 20 sets up the at least one rule. It should here be noted that the communication device 20 may comprise a number of set up rules.

In **step 420**, the communication device 20 detects an impulse. The impulse may comprise a request from an O&M communication device; traffic to/from at least one user equipment served by the communication device 20, an alarm of an internal process of the communication device 20, and/or the like. The impulse may in fact comprise an indication of no data. For example, if no sent data on an ERAB is detected a PM counter may be created counting time periods when the ERAB is not used.

In **step 430**, the communication device 20 determines whether the at least one rule has been fulfilled. For example, in order to fulfil the at least one rule a certain condition has to be met. The certain condition comprises to detect a certain impulse. That is, the at least one rule need to receive an impulse as activation input to be fulfilled. Based on the type of impulse, such as an alarm, event of traffic, request and/or the like, and the information, such as QCI, SW failure and/or the like, of the impulse, the communication device 20 determines whether the at least one rule has been fulfilled or not.

In **step 440**, wherein the at least one rule has been fulfilled, the communication device 20 monitors data associated with the communication device, wherein the communication device detects occurrences of a PM parameter.

In **step 450**, the communication device 20 creates the at least one PM counter to count occurrences of the at least one PM parameter in accordance with what is detected in the monitored data.

In **step 470**, the communication device 20 transmits a message comprising a result of the at least one PM counter to the O&M communication device 30.

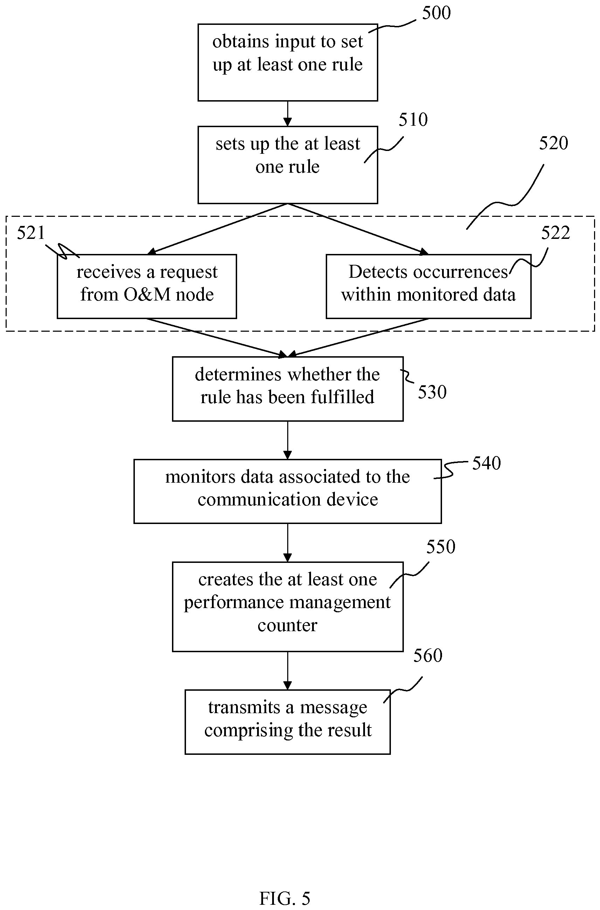

In **FIG. 5**, a method in the communication device 20 according to some embodiments of the present solution is shown.

In **step 500**, the communication device 20 obtains an input to set up at least one rule within the communication device 20. The rule is to be fulfilled in order for the communication device 20 to, by itself, create at least one performance management (PM) counter. The PM counter is arranged to count occurrences of a PM parameter related to the communication device 20. The step 500 in FIG. 5 corresponds to step 400 in FIG. 4.

In **step 510**, the communication device 20 sets up the at least one rule. It should here be noted that the communication device 20 may comprise a number of set up rules. The step 510 in FIG. 5 corresponds to step 410 in FIG. 4.

In **step 520**, the communication device 20 detects an impulse. The impulse may comprise different types of signals or events, such as a received request for creating a counter from a O&M communication device 30, an occurrence of an event in received traffic from a UE served by the communication device 20, an occurrence of a situation in hardware or software within the communication device 20, and/or the like. The step 520 in FIG. 5 corresponds to step 420 in FIG. 4.

In **step 521**, illustrated as an example of step 520, the communication device 20 may detect an impulse comprising a request from the O&M communication device 30. The communication device 20 may also detect an impulse, as stated in alternative **step 522**, illustrated as another example of step 520, comprising data associated to the communication device 20 also defined as occurrences of events or situations within monitored data related to the communication device 20.

In **step 530**, the communication device 20 determines whether the at least one rule has been fulfilled based on the detected impulse. In order to fulfil a rule a certain criterion has to be fulfilled; that is, a certain impulse has to be detected. The step 530 in FIG. 5 corresponds to step 430 in FIG. 4.

The at least one rule receives an impulse as an activator; a trigger of the at least one rule. Based on the impulse the communication device 20 determines whether the rule has been fulfilled or not. As stated above, the impulse may comprise different types of signals and/or events.

In some embodiments, the impulse comprises a request from the O&M communication device 30, being a request for counting occurrences of a single PM parameter. The at least one rule, set up in the communication device 20, may state that if a request for counting occurrences of the single PM parameter is received, at least one PM counter should be created counting occurrences of a PM parameter detected in the monitored data associated to the single PM parameter.

It should here be noted that the rule may state that when a request is received of a single PM parameter the communication device 20 should monitor received traffic and based on the monitoring create PM counters relevant to the monitored traffic.

A PM parameter may comprise a, Quality of service Class Identifier, Core Network Identifier, E-UTRAN Radio Access Bearer, International Mobile Subscriber Identity, mobile type, and/or the like.

Another example; the impulse comprises data related to the communication device 20, as stated in 522, for example, traffic received from at least one UE connected to the communication device 20. A rule may state that if a certain event occurs in traffic received from UEs, a PM counter should be created for counting such events. The at least one rule may further state to create a PM counter to count occurrences of a PM parameter detected in the monitored data that has occurred during a predetermined time period and/or a preset number of times.

The event of the traffic may comprise occurrence of an ERAB establishment of used QCI classes, a dropped connection, a certain low throughput of an ERAB and/or the like. The event may also comprise a lack of traffic/traffic event. For example, a rule may state that, if no occurrence of an event of a previously created PM counter has reoccurred during a predetermined time period, the previously created PM counter should be removed. Hence, the communication device 20 dynamically creates PM counters. In some embodiment, the event comprises the lack of traffic, and the rule may state that if no traffic has been received a PM counter may be created for counting the time of lacking traffic. Hence, a rule may state that a PM parameter that has not occurred in the monitored data during a predetermined time or occurred a number of times but the number is under a preset threshold during a predetermined time, the counter of such a PM parameter should be removed.

The impulse may also comprise an event within the communication device 20, such as an alarm of a software/hardware failure within the communication device 20. Thus, the impulse may comprise at least one occurrence of a PM parameter in received traffic or internal processes of the communication device 20.

In **step 540**, when the at least one rule has been fulfilled, the communication device 20 monitors data associated to the communication device and detects occurrences in the data to determine PM parameters to count. The data may comprise data of traffic served by the communication device 20, data of internal process of the communication device 20 and/or the like. The step 540 in FIG. 5 corresponds to step 440 in FIG. 4.

In **step 550**, the communication device 20 creates the at least one PM counter to count occurrences of the at least one PM parameter detected in the monitored data. Hence, means are provided not to hard code PM counters but in a flexible way create PM counters internally, that is, the communication device 20 intelligently creates PM counters based on monitored data related to the communication device 20. The at least one rule defines implicitly the PM counters by stating what the communication device should monitor and base its creation of PM counters. For example, the at least one rule defines the data for the communication device 20 to monitor, such as data relating to internal processes, data relating to traffic, and/or the like. Thus, the communication device 20 monitors the defined data within the communication device and based on detection of occurrences of relevant events, defined by the rule, within the monitored data creates relevant PM counters. The step 550 in FIG. 5 corresponds to step 450 in FIG. 4.

Hence, the communication device 20 creates PM counters based on what it experiences; the communication device 20 will by itself detect which counters that it should define and activate. The communication device 20 will then always measure relevant things based on what it experiences and not what is predefined i.e. it makes it possible to identify things that are not expected to happen. Hence, a way of creating PM counters for counting relevant PM parameters is provided resulting in a more efficient and reliable way to perform performance analysis.

In **step 560**, the communication device 20 transmits a message comprising a result of the at least one PM counter to the O&M communication device 30. The result indicates the number of occurrences of a PM parameter. It should here be noted that the result may indicate that no occurrences has been registered. In some embodiments, the message further comprises a definition of the PM parameter that has been counted. The definition may comprises a name, composed by combining a definition of the single PM parameter and the PM parameter that has been counted based on a predetermined rule. The step 560 of FIG. 5 corresponds to the step 460 of FIG. 4.

In some embodiments, a second rule set up in the communication device 20 may state how to define a definition of the message. The definition comprises a PM parameter that has been counted according to the second rule. The name may facilitate the way of the O&M communication device 30 to analyse the result from the communication device 20. For example, an operator wants to count ERAB establishment for each QCI in the communication device 20 but the O&M communication device 30 does not know which QCIs that are used in the communication device 20. If the traffic in the communication device 20 is monitored by the communication device 20 and determined to comprise ERAB establishments of QCI2, QCI17 and QCI45, then PM counters named pmErabestablishmentQCI2, pmErabestablishmentQCI17 and pmErabestablishmentQCI45 are automatically created. Today 256 QCIs exist, however, if the number of QCIs is increased to 512 QCIs a new code in the communication device 20 is not needed to define the new QCIs but instead, based on the same rules, a PM counter may be created and named also for QCIs 256 - 512.

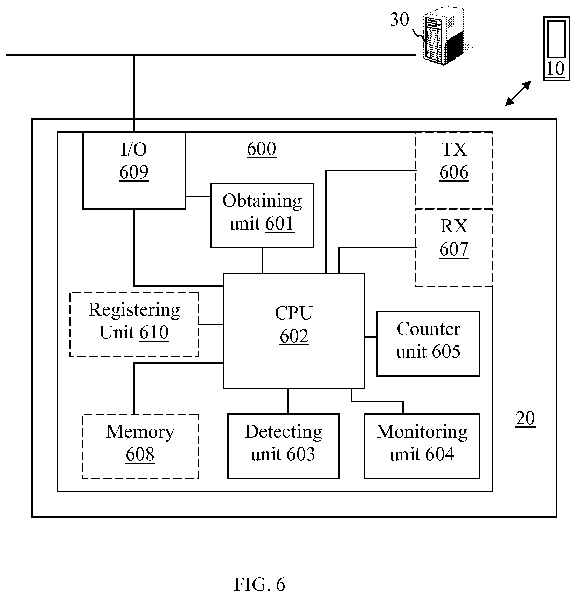

To perform the method steps above for enabling the provision of PM data to be used in a performance analysis related to the communication device 20, the communication device 20 comprises an arrangement **600** depicted in **FIG. 6****.**

The communication device arrangement 600 comprises an obtaining unit **601** arranged to obtain an input of at least one rule set up at least one rule within the communication device 20. The at least one rule is to be fulfilled for creating at least one PM counter to count occurrences of a PM parameter related to the communication device 20.

The communication device arrangement 600 further comprises a processing unit **602** arranged to set up the at least one rule, and also a detection unit **603** arranged to detect an impulse. The processing unit 602 is further arranged to determine whether the at least one rule has been fulfilled based on the impulse.

Furthermore, the communication device arrangement 600 comprises a monitoring unit **604** arranged to, when the at least one rule has been fulfilled, monitor data associated to the communication device 20. The data may comprise data of traffic served by the communication device 20, data of internal process of the communication device 20 and/or the like. The communication device arrangement 600 further comprises a counter unit **605** that is arranged to create the at least one PM counter to count occurrences of the at least one PM parameter detected in the monitored data.

The communication device arrangement 600 may further comprise a transmission unit (TX) **606** and a receiving unit (RX) **607.** TX 606 and RX 607 are arranged to receive and transmit data packets/signals, that is, traffic, to and from user equipment 10 served by the communication device 20.

In some embodiments, the impulse comprises different types of signals/events, such as, a received request for creating a counter from the O&M communication device 30 over a network interface unit (I/O) **609**, an occurrence of an event in received traffic over the RX 607, an occurrence of an event in hardware or software within the communication device 20, and/or the like.

A result of the at least one PM counter is transmitted within a message over the I/O 609 to the O&M communication device 30. In some embodiments, the communication device arrangement 600 may furthermore comprise a registering unit **610** arranged to register the result of the at least one PM counter. The result may be indicating a zero result if no occurrences has been detected.

In some embodiments, the message comprises a definition of the PM parameter that has been counted. The definition may comprises a name, composed by combining a definition of the single PM parameter and the PM parameter that has been counted based on a predetermined rule set up in the processing unit 602.

The communication device arrangement 600 may further comprise a memory unit **608** to be used to store data regarding set up rules, received traffic, internal processes, definitions, and applications to perform the methods of this solution.

The memory unit 608 may comprise a single memory unit, a plurality of memory units, external and/or internal memory units.

The processing unit 602 may comprise a CPU (as illustrated), a single processing unit, a plurality of processing units, and or the like. It should also be understood that the input unit 601, the detection unit 603, monitoring unit 604, the counter unit 605, and/or registering unit 610 may all be parts of a processing unit.

PM parameters may comprise Quality of Service Class identifier, Core Network Identifier, Evolved Universal Terrestrial Radio Access Network Radio Access Bearer (ERAB) establishments of different Quality of Service Class identifier. In WCDMA, where a base station knows the International Mobile Subscriber Identity (IMSI) of UEs one could create PM counters for each and every UE, groups of UEs or certain specific IMSIs of UEs.

It should be understood that QCI is used by communication devices 20 to control bearer level packet forwarding treatment, for example, admission threshold values, queue management threshold values and/or the like. These may be specified by the operator.

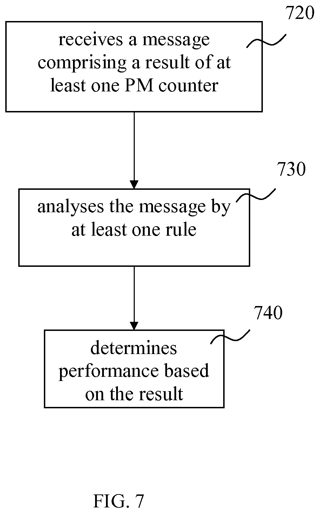

In **FIG. 7**, a general embodiment of the present solution is disclosed as a flowchart of a method in the O&M communication device 30. The method is for determining performance related to the communication device 20.

In **step 720,** the O&M communication device 30 receives a message comprising a result of at least one PM counter indicating occurrences of a PM parameter from the communication device 20.

In **step 730,** the O&M communication device 30 analyses the message by using at least one rule. The rule is used to determine that the PM parameter of the at least one PM counter is related to a single PM parameter defined within the O&M communication device 30.

In **step 740**, the O&M communication device 30 determines performance related to the communication device 20 based on the result received from the communication device 20 in relation to the single PM parameter.

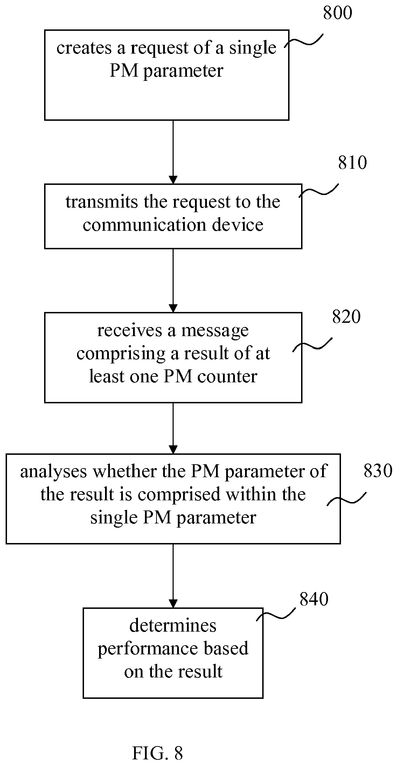

In **FIG. 8**, some embodiments of the present solution in the O&M communication device 30 discussed in relation to FIG. 7 are disclosed. The method is for the O&M communication device 30 to determine performance related to the communication device 20.

In **step 800,** the O&M communication device 30 creates a request for counting a single PM parameter of the communication device. This may be based on a command from an operator, according to a cyclic rule, based on indication from a neighbouring core communication device and/or the like. The single performance parameter is used to determine the performance related to the communication device 20. The single PM parameter may comprise connections per QCI, failure alarms of internal processes of the communication device 20 and/or the like

In **step 810,** the O&M communication device 30 transmits the request to the communication device 20. In some embodiments, the request is transmitted over an O&M interface connection or the like, to the communication device 20. The request may be confirmed from the communication device 20.

In **step 820,** the O&M communication device 30 receives a message comprising a result of at least one PM counter indicating occurrences of a PM parameter from the communication device 20. The PM counter has been created at the communication device 20 in accordance with a rule activated by the request sent in step 810. It should here be understood that the result may indicate that no occurrences has been detected and counted at the communication device 20. The step 820 in FIG. 8 corresponds to step 720 in FIG. 7.

In **step 830,** the O&M communication device 30 analyses the message by using at least one rule. The rule is used to determine that the PM parameter of the at least one counter is related to the single PM parameter defined within the O&M communication device 30. The step 830 in FIG. 8 corresponds to step 730 in FIG. 7. Thereby, a more efficient and reliable way to perform performance analysis is provided.

In some embodiments, the analysing comprises to analyse the PM parameter of the PM counter and to compare the PM parameter to a predetermined rule/list/table whether the PM parameter is comprised within the single PM parameter to enable the determining of performance. For example, by using a rule stating that the definition of the PM counter, that is, the name of the PM counter, comprises a combination of a definition of the single PM parameter and the PM parameter that has been counted, the O&M communication device 30 will be able to determine, by analysing the name, whether the result relates to the single PM parameter. This will enhance performance analysis making the performance analysis more efficient and reliable when adding new PM parameters. For example, in the case of the PM parameter ERAB establishments of QCIs, there exist 256 QCIs, if one should add another QCI, the PM counter of that QCI would automatically be named pmErabEstablQCl257. Hence, there is no need to define the new PM parameters in the O&M communication device

In **step 840**, the O&M communication device 30 determines performance related to the communication device 20 based on the result received from the communication device 20 in relation to the single PM parameter. The step 840 in FIG. 8 corresponds to step 740 in FIG. 7.

In a simplified example, the O&M communication device 30 receives results from a number of PM counters defined as pmDroppedERAB1, pmDroppedERAB4, and pmDroppedERAB36 indicating dropped connections of different ERABs. The O&M communication device then "transforms" the results of the different ERABs into a result of single PM parameter, that is, total dropped connections and determines the performance based on adding the different results into one result relating to the single PM parameter. It should be understood that if the O&M communication device 30 is interested of knowing which ERAB that is dropped the most, that is, the single PM parameter is which ERAB that is dropped the most, the results are compared to determine the single PM parameter.

Hence, the presented solution enables an efficient and reliable way to perform performance analysis within a radio telecommunications network.

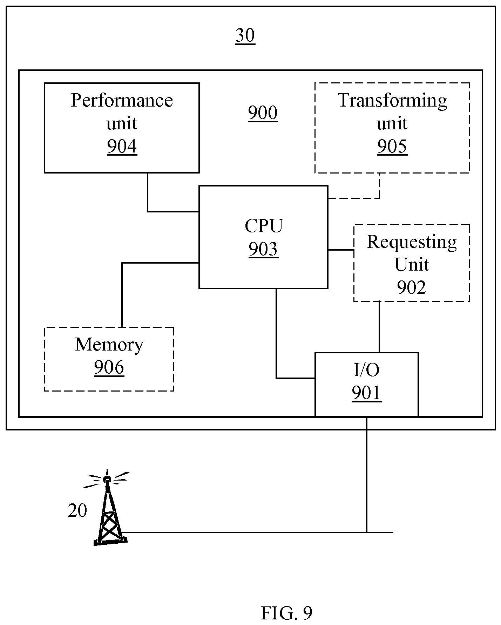

To perform the method steps above for enabling the provision of PM data to be used in a performance analysis related to the communication device 20, the O&M communication device 30 comprises an O&M arrangement **900** depicted in **FIG. 9****.**

The O&M arrangement 900 comprises a network interface unit (I/O) **901** arranged to receive a message comprising a result of at least one PM counter indicating occurrences of a PM parameter from the communication device 20.

In some embodiments, the O&M arrangement 900 comprises a requesting unit **902** arranged to create a request for counting a single PM parameter of the communication device 20. In these embodiments, the I/O 901 is further used to transmit the request to the communication device 20.

The O&M arrangement 900 further comprises a processing unit (CPU) **903** arranged to analyze the message by using at least one rule to determine that the PM parameter of the at least one counter is related to the single PM parameter defined within the O&M arrangement 900.

The O&M arrangement 900 further comprises a performance unit **904** arranged to determine performance of the communication device 20 based on the result received from the communication device 20 in relation to the single PM parameter.

In some embodiments, the O&M arrangement 900 comprises a transforming unit **905** arranged to transform the result of the PM counter to define a result related to the single PM parameter. The performance unit 904 is further arranged to determine performance related to the communication device 20 based on the transformed result. By letting the definition of the result comprise a name of the counted PM parameter it will be facilitated for the O&M arrangement 900 to determine what single PM parameter the result relates to.

The O&M arrangement 900 may further comprise a memory unit **906** to be used to store data regarding, for example, rules, definitions, and applications to perform the methods of this solution.

The memory unit 906 may comprise a single memory unit, a plurality of memory units, external and/or internal memory units.

The processing unit 903 may comprise a CPU (as illustrated), a single processing unit, a plurality of processing units, and or the like. It should also be understood that the request unit 902, processing unit 903, the performance unit 904, and the transforming unit 905 may all be parts of a processing unit/s.

In some implementations, the functions/acts noted in the blocks may occur out of the order noted in the operational illustrations. For example, two blocks shown in succession may in fact be executed substantially concurrently or the blocks may sometimes be executed in the reverse order, depending upon the functionality/acts involved.

In the drawings and specification, there have been disclosed exemplary embodiments. However, many variations and modifications can be made to these embodiments. Accordingly, although specific terms are employed, they are used in a generic and descriptive sense only and not for purposes of limitation, the scope of the invention being defined by the following claims.

## Claims

1. A method in a communication device (20) of a radio telecommunications network for enabling provision of data to be used in a performance analysis, the method comprising:
*obtaining* (200,300,400,500) an input to set up at least one rule within the communication device (20), which rule is to be fulfilled in order to create at least one performance management counter to count occurrences of a performance management parameter related to the communication device (20),
*setting up* (210,310,410,510) the at least one rule,
*detecting* (420,520) an impulse,
*determining* (240,330,430,530) whether the at least one rule is fulfilled based on the impulse,
when the at least one rule is fulfilled, *monitoring* (440,540) data associated to the communication device (20),
dynamically *creating* (250,340,450,550), when the at least one rule is fulfilled, the at least one performance management counter to count occurrences of the at least one performance management parameter detected in the monitored data,
*transmitting* (280,395,460,560) a message comprising a result of the at least one performance management counter to an operation and maintenance communication device (30), the method being **characterized in that**:
the detecting of an impulse further comprises *receiving* (521) the impulse, wherein the impulse comprises a request, from the operation and maintenance communication device (30), requesting the communication device (20) to create a performance management counter for counting a single performance management parameter,
the at least one rule states that if an impulse comprises a request requesting a creation of a performance management counter of the single performance management parameter, more than one performance management counter should be created counting occurrences of a performance management parameter detected in the monitored data associated to the single performance management parameter, and
the transmission of a message comprises transmission of results of the more than one performance management counters.

2. A method according to claim 1, wherein the message further comprises a definition of the performance management parameter counted, which definition comprises a name, composed by combining a definition of the single performance management parameter and the performance management parameter counted based on a predetermined rule.

3. A method according to any of claims 1-2, wherein the performance management parameter comprises a core network identifier, E-UTRAN radio access bearer of a quality of service class identifier, international mobile subscriber identity, and/or mobile type.

4. A method according to any of claims 1-3, wherein the monitored data comprises traffic served by the communication device (20).

5. A method according to any of the claims 1-4, wherein the monitored data comprises an internal process of the communication device (20).

6. A method according to any of claims 1-5, wherein the impulse comprises at least one occurrence of a performance management parameter in received traffic or internal processes of the communication device (20).

7. A method according to any of claims 1-6 wherein the at least one rule further states to create a performance management counter to count occurrences of one or more performance management parameters in the monitored data that has occurred during a predetermined time period and/or a preset number of times.

8. A method according to any of claims 1-7, wherein the at least one rule further states that a performance management counter should be removed when an occurrence a performance management parameter of that performance management counter has not occurred in the monitored data during a predetermined time or occurred a number of times but the number is under a preset threshold during a predetermined time.

9. A method in an operation and maintenance communication device (30) for determining performance related to a communication device (20) in a radio telecommunications network, the method comprising:
*creating* (*220*,800) a request for counting a single performance management parameter;
*transmitting* (230,810) the created request to the communication device (20), *receiving* (*720*,820) a message from the communication device (20) comprising results of more than one performance management counter for counting occurrences of a performance management parameter detected in monitored data associated to the requested single performance parameter, wherein each result indicates occurrences of the performance management parameter detected in the monitored data associated to the requested single performance management parameter,
*analysing* (290,399,730,830) the message by at least one rule for determining that the performance management parameters of the more than one performance management counters are related to the requested single performance management parameter defined within the operation and maintenance communication device (30), and
when determined that the performance management parameters of the more than one performance management counter are related to the requested single performance management parameter, *determining* (740,840) performance related to the communication device (20) based on the results received from the communication device (20) in relation to the requested single performance management parameter, and wherein the *analysing* (290,399,730,830) comprises to analyse the performance management parameters of the performance management counters and to compare the performance management parameters to a predetermined rule, list or table whether the performance management parameters are comprised within the requested single performance management parameter to enable the determining of the performance.

10. An communication device arrangement (600) for a communication device (20) comprising
an obtaining unit (601) arranged to obtain an input to set up an at least one rule within the communication device, which rule is to be fulfilled in order to create at least one performance management counter to count occurrences of a performance management parameter related to the communication device (20),
a processing unit (602) arranged to set up the at least one rule,
a detecting unit (603) arranged to detect an impulse, wherein the impulse is used by the processing unit (602) to determine whether the at least one rule is fulfilled,
a monitoring unit (604) arranged, in the case the at least one rule is fulfilled, to monitor data associated to the communication device (20),
a counter unit (605) arranged to dynamically create, when the at least one rule is fulfilled, the at least one performance management counter to count occurrences of the at least one performance management parameter detected in the monitored data, and
a network interface unit (609) arranged to transmit a result of the at least one performance management counter within a message to an operation and maintenance communication device (30), the communication device arrangement being
**characterized in that**:
the detecting unit is arranged to receive the impulse used by the processing unit (602) to determine whether the at least one rule is fulfilled, wherein the impulse comprises a request, from the operation and maintenance communication device (30), requesting the communication device (20) to create a performance management counter for counting a single performance management parameter,
the at least one rule states that if an impulse comprises a request requesting a creation of a performance management counter of the single performance management parameter, a performance management counter should be created counting occurrences of a performance management parameter detected in the monitored data associated to the single performance management parameter,
the counter unit is arranged to create more than one performance management counter for counting occurrences of a performance management parameter detected in monitored data associated to the requested single performance parameter, and
the network interface unit is arranged to transmit results of the more than one performance management counters.

11. A communication device (20) comprising a communication device arrangement (600) according to claim 10.

12. An operation and maintenance arrangement (900) for an operation and maintenance communication device (30) comprising:
a network interface unit (901) arranged to receive a message from a communication device (20), which message comprises results of more than one performance management counter, wherein each result indicates an occurrence of a performance management parameter detected in monitored data associated to a single performance parameter requested from the operation and maintenance arrangement (900);
a requesting unit (902) arranged to create the request for counting the single performance management parameter, wherein the network interface unit (901) is further configured to transmit the request to the communication device (20);
a processing unit (903) arranged to analyse the message by at least one rule to determine whether the performance management parameters of the more than one performance management counters received from the communication device (20) are related to the requested single performance management parameter defined within the operation and maintenance arrangement (900); and
a performance unit (904) arranged, when determined that the performance management parameters of the more than one performance management counters received from the communication device (20) are related to the requested single performance management parameter, to determine performance related to the communication device (20) based on the result received from the communication device (20)in relation to the requested single performance management parameter.

13. An operation and maintenance communication device (30) comprising an operation and maintenance arrangement (900) according to claim 12.

## Patentansprüche

1. Verfahren in einer Kommunikationseinrichtung (20) eines Funk-Telekommunikationsnetzes zum Ermöglichen von Bereitstellung von Daten, die in einer Leistungsanalyse zu verwenden sind, wobei das Verfahren umfasst:
Erlangen (200, 300, 400, 500) einer Eingabe, um zumindest eine Regel innerhalb der Kommunikationseinrichtung (20) aufzustellen, wobei die Regel erfüllt werden muss, um zumindest einen Leistungsverwaltungszähler zu erzeugen, um Vorkommnisse eines Leistungsverwaltungsparameters bezüglich der Kommunikationseinrichtung (20) zu zählen, Aufstellen (210, 310, 410, 510) der zumindest einen Regel, Erfassen (420, 520) eines Impulses,
Bestimmen (240, 330, 430, 530), auf Grundlage des Impulses, ob die zumindest eine Regel erfüllt ist,
wenn die zumindest eine Regel erfüllt ist, Überwachen (440, 540) von Daten, die mit der Kommunikationseinrichtung (20) verknüpft sind,
wenn die zumindest eine Regel erfüllt ist, dynamisches Erzeugen (250, 340, 450, 550) des zumindest einen Leistungsverwaltungszählers, um Vorkommnisse des zumindest einen Leistungsverwaltungsparameters, der in den überwachten Daten erfasst ist, zu zählen,
Übertragen (280, 395, 460, 560) einer Nachricht, die ein Ergebnis des zumindest einen Leistungsverwaltungszählers umfasst, an eine Betriebs- und Erhaltungskommunikationseinrichtung (30), wobei das Verfahren **dadurch gekennzeichnet ist, dass**:
das Erfassen eines Impulses ferner Empfangen (521) des Impulses umfasst, wobei der Impuls eine Aufforderung von der Betriebs- und Erhaltungskommunikationseinrichtung (30) umfasst, die die Kommunikationseinrichtung (20) auffordert, einen Leistungsverwaltungszähler zum Zählen eines einzelnen Leistungsverwaltungsparameters zu erzeugen,
die zumindest eine Regel besagt, dass, falls ein Impuls eine Aufforderung umfasst, die zu einer Erzeugung eines Leistungsverwaltungszählers des einzelnen Leistungsverwaltungsparameters auffordert, mehr als ein Leistungsverwaltungszähler erzeugt werden sollte, der Vorkommnisse eines Leistungsverwaltungsparameters, der in den mit dem einzelnen Leistungsverwaltungsparameter verknüpften überwachten Daten erfasst ist, zählt, und
die Übertragung einer Nachricht Übertragung von Ergebnissen der mehr als einen Leistungsverwaltungszähler umfasst.

2. Verfahren nach Anspruch 1, wobei die Nachricht ferner eine Definition des gezählten Leistungsverwaltungsparameters umfasst, wobei die Definition einen Namen umfasst, der durch Kombinieren einer Definition des einzelnen Leistungsverwaltungsparameters und des auf Grundlage einer vorbestimmten Regel gezählten Leistungsverwaltungsparameters zusammengesetzt ist.

3. Verfahren nach einem der Ansprüche 1-2, wobei der Leistungsverwaltungsparameter eine Kernnetzkennung, einen E-UTRAN-Funkzugangsträger einer Servicequalitätsklassenkennung, eine internationale Mobilteilnehmeridentität und/oder einen Mobiltyp umfasst.

4. Verfahren nach einem der Ansprüche 1-3, wobei die überwachten Daten Verkehr umfassen, der von der Kommunikationseinrichtung (20) bedient wird.

5. Verfahren nach einem der Ansprüche 1-4, wobei die überwachten Daten einen internen Prozess der Kommunikationseinrichtung (20) umfassen.

6. Verfahren nach einem der Ansprüche 1-5, wobei der Impuls zumindest ein Vorkommnis eines Leistungsverwaltungsparameters in empfangenem Verkehr oder internen Prozessen der Kommunikationseinrichtung (20) umfasst.

7. Verfahren nach einem der Ansprüche 1-6, wobei die zumindest eine Regel ferner besagt,
einen Leistungsverwaltungszähler zu erzeugen, um Vorkommnisse eines oder mehrerer Leistungsverwaltungsparameter in den überwachten Daten zu zählen, die während eines vorbestimmten Zeitraums und/oder eine vorab festgelegte Anzahl von Malen aufgetreten sind.

8. Verfahren nach einem der Ansprüche 1-7, wobei die zumindest eine Regel ferner besagt,
dass ein Leistungsverwaltungszähler entfernt werden sollte, wenn ein Vorkommnis eines Leistungsverwaltungsparameters dieses Leistungsverwaltungszählers in den überwachten Daten während einer vorbestimmten Zeit nicht aufgetreten ist oder eine Anzahl von Malen aufgetreten ist, aber die Anzahl unter einem vorab festgelegten Schwellenwert während einer vorbestimmten Zeit liegt.

9. Verfahren in einer Betriebs- und Erhaltungskommunikationseinrichtung (30) zum Bestimmen von Leistung bezüglich einer Kommunikationseinrichtung (20) in einem Funk-Telekommunikationsnetz, wobei das Verfahren umfasst:
Erzeugen (220, 800) einer Aufforderung zum Zählen eines einzelnen Leistungsverwaltungsparameters;
Übertragen (230, 810) der erzeugten Aufforderung an die Kommunikationseinrichtung (20),
Empfangen (720, 820) einer Nachricht von der Kommunikationseinrichtung (20), umfassend Ergebnisse von mehr als einem Leistungsverwaltungszähler zum Zählen von Vorkommnissen eines Leistungsverwaltungsparameters, der in den mit dem aufgeforderten einzelne Leistungsparameter verknüpften überwachten Daten erfasst ist, wobei jedes Ergebnis Vorkommnisse des Leistungsverwaltungsparameters, der in den mit dem aufgeforderten einzelne Leistungsparameter verknüpften überwachten Daten erfasst ist, angibt,
Analysieren (290, 399, 730, 830) der Nachricht durch zumindest eine Regel zum Bestimmen, dass sich die Leistungsverwaltungsparameter der mehr als einen Leistungsverwaltungszähler auf den aufgeforderten einzelnen Leistungsverwaltungsparameter beziehen, der innerhalb der Betriebs- und Erhaltungskommunikationseinrichtung (30) definiert ist, und
wenn bestimmt ist, dass sich die Leistungsverwaltungsparameter des mehr als einen Leistungsverwaltungszählers auf den aufgeforderten einzelnen Leistungsverwaltungsparameter beziehen, Bestimmen (740, 840) von Leistung bezüglich der Kommunikationseinrichtung (20) auf Grundlage der von der Kommunikationseinrichtung (20) empfangenen Ergebnisse in Bezug auf den aufgeforderten einzelnen Leistungsverwaltungsparameter, und wobei das Analysieren (290, 399, 730, 830) umfasst, die Leistungsverwaltungsparameter der Leistungsverwaltungszähler zu analysieren und die Leistungsverwaltungsparameter mit einer vorbestimmten Regel, Liste oder Tabelle zu vergleichen, ob die Leistungsverwaltungsparameter innerhalb des aufgeforderten einzelnen Leistungsverwaltungsparameters enthalten sind, um das Bestimmen der Leistung zu ermöglichen.

10. Kommunikationseinrichtungsanordnung (600) für eine Kommunikationseinrichtung (20), umfassend
eine Erlangungseinheit (601), angeordnet zum Erlangen einer Eingabe, um zumindest eine Regel innerhalb der Kommunikationseinrichtung aufzustellen, wobei die Regel erfüllt werden muss, um zumindest einen Leistungsverwaltungszähler zu erzeugen, um Vorkommnisse eines Leistungsverwaltungsparameters bezüglich der Kommunikationseinrichtung (20) zu zählen,
eine Verarbeitungseinheit (602), angeordnet zum Aufstellen der zumindest einen Regel,
eine Erfassungseinheit (603), angeordnet zum Erfassen eines Impulses, wobei der Impuls von der Verarbeitungseinheit (602) verwendet wird, um zu bestimmen, ob die zumindest eine Regel erfüllt ist,
eine Überwachungseinheit (604), angeordnet zum Überwachen von Daten, die mit der Kommunikationseinrichtung (20) verknüpft sind, wenn die zumindest eine Regel erfüllt ist, eine Zählereinheit (605), angeordnet zum dynamischen Erzeugen des zumindest einen Leistungsverwaltungszählers, um Vorkommnisse des zumindest einen Leistungsverwaltungsparameters, der in den überwachten Daten erfasst ist, zu zählen, wenn die zumindest eine Regel erfüllt ist, und
eine Netzschnittstelleneinheit (609), angeordnet zum Übertragen eines Ergebnisses des zumindest einen Leistungsverwaltungszählers in einer Nachricht an eine Betriebs- und Erhaltungskommunikationseinrichtung (30), wobei die Kommunikationseinrichtungsanordnung **dadurch gekennzeichnet ist, dass**:
die Erfassungseinheit angeordnet ist, um den Impuls zu empfangen, der von der Verarbeitungseinheit (602) verwendet wird, um zu bestimmen, ob die zumindest eine Regel erfüllt ist, wobei der Impuls eine Aufforderung von der Betriebs- und Erhaltungskommunikationseinrichtung (30) umfasst, die die Kommunikationseinrichtung (20) auffordert, einen Leistungsverwaltungszähler zum Zählen eines einzelnen Leistungsverwaltungsparameters zu erzeugen,
die zumindest eine Regel besagt, dass, falls ein Impuls eine Aufforderung umfasst, die zu einer Erzeugung eines Leistungsverwaltungszählers des einzelnen Leistungsverwaltungsparameters auffordert, ein Leistungsverwaltungszähler erzeugt werden sollte, der Vorkommnisse eines Leistungsverwaltungsparameters, der in den mit dem einzelnen Leistungsverwaltungsparameter verknüpften überwachten Daten erfasst ist, zählt,
die Zählereinheit angeordnet ist, um mehr als einen Leistungsverwaltungszähler zum Zählen von Vorkommnissen eines Leistungsverwaltungsparameters, der in den mit dem aufgeforderten einzelnen Leistungsparameter verknüpften überwachten Daten erfasst ist, zu erzeugen, und
die Netzschnittstelleneinheit angeordnet ist, um Ergebnisse der mehr als einen Leistungsverwaltungszähler zu übertragen.

11. Kommunikationseinrichtung (20), umfassend eine Kommunikationseinrichtungsanordnung (600) nach Anspruch 10.

12. Betriebs- und Erhaltungsanordnung (900) für eine Betriebs- und Erhaltungskommunikationseinrichtung (30), umfassend:
eine Netzschnittstelleneinheit (901), angeordnet, um eine Nachricht von einer Kommunikationseinrichtung (20) zu empfangen, wobei die Nachricht Ergebnisse von mehr als einem Leistungsverwaltungszähler umfasst, wobei jedes Ergebnis ein Vorkommnis eines Leistungsverwaltungsparameters angibt, der in überwachten Daten erfasst ist, die mit einem einzelnen von der Betriebs- und Erhaltungsanordnung (900) aufgeforderten Leistungsparameter verknüpft sind;
eine Aufforderungseinheit (902), angeordnet, um die Aufforderung zum Zählen des einzelnen Leistungsverwaltungsparameters zu erzeugen, wobei die Netzschnittstelleneinheit (901) ferner konfiguriert ist, um die Aufforderung an die Kommunikationseinrichtung (20) zu übertragen;
eine Verarbeitungseinheit (903), angeordnet, um die Nachricht mit zumindest einer Regel zu analysieren, um zu bestimmen, ob sich die Leistungsverwaltungsparameter der mehr als einen von der Kommunikationseinrichtung (20) empfangenen Leistungsverwaltungszähler auf den aufgeforderten einzelnen Leistungsverwaltungsparameter beziehen, der innerhalb der Betriebs- und Erhaltungsanordnung (900) definiert ist; und
eine Leistungseinheit (904), angeordnet, um Leistung bezüglich der Kommunikationseinrichtung (20) auf Grundlage des von der Kommunikationseinrichtung (20) in Bezug auf den aufgeforderten einzelnen Leistungsverwaltungsparameter empfangenen Ergebnisses zu bestimmen, wenn bestimmt ist, dass sich die Leistungsverwaltungsparameter der mehr als einen von der Kommunikationseinrichtung (20) empfangenen Leistungsverwaltungszähler auf den aufgeforderten einzelnen Leistungsverwaltungsparameter beziehen.

13. Betriebs- und Erhaltungskommunikationseinrichtung (30), umfassend eine Betriebs- und Erhaltungsanordnung (900) nach Anspruch 12.

## Revendications

1. Procédé dans un dispositif de communication (20) d'un réseau de radiocommunications pour permettre la fourniture de données devant être utilisées dans une analyse de performances, le procédé comprenant :
l'obtention (200, 300, 400, 500) d'une entrée pour établir au moins une règle à l'intérieur du dispositif de communication (20), laquelle règle doit être satisfaite afin de créer au moins un compteur de gestion de performances pour compter les occurrences d'un paramètre de gestion de performances relatif au dispositif de communication (20),
l'établissement (210, 310, 410, 510) de l'au moins une règle, la détection (420, 520) d'une impulsion,
la détermination (240, 330, 430, 530) du fait que l'au moins une règle est satisfaite ou non sur la base de l'impulsion,
lorsque l'au moins une règle est satisfaite, la surveillance (440, 540) des données associées au dispositif de communication (20),
la création dynamique (250, 340, 450, 550), lorsque l'au moins une règle est satisfaite, de l'au moins un compteur de gestion de performances pour compter les occurrences de l'au moins un paramètre de gestion de performances détectées dans les données surveillées,
la transmission (280, 395, 460, 560) d'un message comprenant un résultat de l'au moins un compteur de gestion de performances à un dispositif de communication d'exploitation et de maintenance (30), le procédé étant **caractérisé en ce que** :
la détection d'une impulsion comprend en outre la réception (521) de l'impulsion, dans lequel l'impulsion comprend une demande, du dispositif de communication d'exploitation et de maintenance (30), demandant au dispositif de communication (20) de créer un compteur de gestion de performances pour compter un paramètre de gestion de performance unique,
l'au moins une règle stipule que si une impulsion comprend une demande demandant une création d'un compteur de gestion de performances du paramètre de gestion de performance unique, plusieurs compteurs de gestion de performances doivent être créés comptant les occurrences d'un paramètre de gestion de performances détectées dans les données surveillées associées au paramètre de gestion de performance unique, et
la transmission d'un message comprend la transmission de résultats des plusieurs compteurs de gestion de performances.

2. Procédé selon la revendication 1, dans lequel le message comprend en outre une définition du paramètre de gestion de performances compté, laquelle définition comprend un nom, composé en combinant une définition du paramètre de gestion de performance unique et du paramètre de gestion de performances compté sur la base d'une règle prédéterminée.

3. Procédé selon l'une quelconque des revendications 1 et 2, dans lequel le paramètre de gestion de performances comprend un identifiant de réseau central, une porteuse d'accès radio E-UTRAN d'une qualité d'identifiant de classe de service, une identité internationale d'abonné mobile et/ou un type de mobile.

4. Procédé selon l'une quelconque des revendications 1 à 3, dans lequel les données surveillées comprennent le trafic desservi par le dispositif de communication (20).

5. Procédé selon l'une quelconque des revendications 1 à 4, dans lequel les données surveillées comprennent un processus interne du dispositif de communication (20).

6. Procédé selon l'une quelconque des revendications 1 à 5, dans lequel l'impulsion comprend au moins une occurrence d'un paramètre de gestion de performances dans le trafic reçu ou les processus internes du dispositif de communication (20).

7. Procédé selon l'une quelconque des revendications 1 à 6, dans lequel l'au moins une règle stipule en outre de créer un compteur de gestion de performances pour compter des occurrences d'un ou plusieurs paramètres de gestion de performances dans les données surveillées qui se sont produites au cours d'une période de temps prédéterminée et/ou d'un nombre de fois préétabli.

8. Procédé selon l'une quelconque des revendications 1 à 7, dans lequel l'au moins une règle stipule en outre qu'un compteur de gestion de performances doit être supprimé lorsqu'une occurrence d'un paramètre de gestion de performances dudit compteur de gestion de performances ne s'est pas produite dans les données surveillées au cours d'un temps prédéterminé ni produite un certain nombre de fois mais que le nombre est en dessous d'un seuil préétabli au cours d'un temps prédéterminé.

9. Procédé dans un dispositif de communication d'exploitation et de maintenance (30) pour déterminer une performance relative à un dispositif de communication (20) dans un réseau de radiocommunications, le procédé comprenant :
la création (220, 800) d'une demande de comptage d'un paramètre de gestion de performance unique ;
la transmission (230, 810) de la demande créée au dispositif de communication (20),
la réception (720, 820) d'un message du dispositif de communication (20) comprenant des résultats de plusieurs compteurs de gestion de performances pour compter des occurrences d'un paramètre de gestion de performances détectées dans les données surveillées associées au paramètre de performance unique demandé, dans lequel chaque résultat indique les occurrences du paramètre de gestion de performances détectées dans les données surveillées associées au paramètre de gestion de performance unique demandé,
l'analyse (290, 399, 730, 830) du message par au moins une règle pour déterminer que les paramètres de gestion de performances des plusieurs compteurs de gestion de performances sont relatifs au paramètre de gestion de performance unique demandé défini dans le dispositif de communication d'exploitation et de maintenance (30), et
lorsqu'on a déterminé que les paramètres de gestion de performances des plusieurs compteurs de gestion de performances sont relatifs au paramètre de gestion de performance unique demandé, la détermination (740, 840) de la performance relative au dispositif de communication (20) sur la base des résultats reçus du dispositif de communication (20) en relation avec le paramètre de gestion de performance unique demandé, et
dans lequel l'analyse (290, 399, 730, 830) consiste à analyser les paramètres de gestion de performances des compteurs de gestion de performance et à comparer les paramètres de gestion de performances à une règle, liste ou table prédéterminée si les paramètres de gestion de performances sont compris dans le paramètre de gestion de performance unique demandé pour permettre la détermination de la performance.

10. Agencement de dispositif de communication (600) pour un dispositif de communication (20) comprenant
une unité d'obtention (601) conçue pour obtenir une entrée pour établir une au moins une règle dans le dispositif de communication , laquelle règle doit être satisfaite afin de créer au moins un compteur de gestion de performances pour compter des occurrences d'un paramètre de gestion de performances relatif au dispositif de communication (20),
une unité de traitement (602) conçue pour établir l'au moins une règle,
une unité de détection (603) conçue pour détecter une impulsion, dans lequel l'impulsion est utilisée par l'unité de traitement (602) pour déterminer si l'au moins une règle est satisfaite,
une unité de surveillance (604) conçue, dans le cas où l'au moins une règle est satisfaite, pour surveiller les données associées au dispositif de communication (20),
une unité de comptage (605) conçue pour créer dynamiquement, lorsque l'au moins une règle est satisfaite, l'au moins un compteur de gestion de performances pour compter les occurrences de l'au moins un paramètre de gestion de performances détectées dans les données surveillées, et
une unité d'interface réseau (609) conçue pour transmettre un résultat de l'au moins un compteur de gestion de performances dans un message à un dispositif de communication d'exploitation et de maintenance (30), le dispositif de communication étant **caractérisé en ce que** :
l'unité de détection est conçue pour recevoir l'impulsion utilisée par l'unité de traitement (602) pour déterminer si l'au moins une règle est satisfaite, dans lequel l'impulsion comprend une demande, du dispositif de communication d'exploitation et de maintenance (30), demandant au dispositif de communication (20) de créer un compteur de gestion de performances pour compter un paramètre de gestion de performance unique,
l'au moins une règle stipule que si une impulsion comprend une demande demandant une création d'un compteur de gestion de performances du paramètre de gestion de performance unique, un compteur de gestion de performances doit être créé comptant les occurrences d'un paramètre de gestion de performances détectées dans les données surveillées associées au paramètre de gestion de performance unique,
l'unité de comptage est conçue pour créer plusieurs compteurs de gestion de performances pour compter des occurrences d'un paramètre de gestion de performances détectées dans des données surveillées associées au paramètre de performance unique demandé, et
l'unité d'interface réseau est conçue pour transmettre les résultats des plusieurs compteurs de gestion de performances.

11. Dispositif de communication (20) comprenant un agencement de dispositif de communication (600) selon la revendication 10.

12. Agencement d'exploitation et de maintenance (900) pour un dispositif de communication d'exploitation et de maintenance (30) comprenant :
une unité d'interface réseau (901) conçue pour recevoir un message d'un dispositif de communication (20), lequel message comprend les résultats de plusieurs compteurs de gestion de performances, dans lequel chaque résultat indique une occurrence d'un paramètre de gestion de performances détectée dans les données surveillées associées à un paramètre de performance unique demandé à l'agencement d'exploitation et de maintenance (900) ;
une unité de demande (902) conçue pour créer la demande de comptage du paramètre de gestion de performance unique, dans lequel l'unité d'interface réseau (901) est en outre configurée pour transmettre la demande au dispositif de communication (20) ;
une unité de traitement (903) conçue pour analyser le message par au moins une règle pour déterminer si les paramètres de gestion de performances des plusieurs compteurs de gestion de performances reçus du dispositif de communication (20) sont relatifs au paramètre de gestion de performance unique demandé défini dans l'agencement d'exploitation et de maintenance (900) ; et
une unité de performance (904) conçue, lorsqu'on a déterminé que les paramètres de gestion de performances des plusieurs compteurs de gestion de performances reçus du dispositif de communication (20) sont relatifs au paramètre de gestion de performance unique demandé, pour déterminer la performance relative au dispositif de communication (20) sur la base du résultat reçu du dispositif de communication (20) en relation avec le paramètre de gestion de performance unique demandé.

13. Dispositif de communication d'exploitation et de maintenance (30) comprenant un agencement d'exploitation et de maintenance (900) selon la revendication 12.
